# EUROPEAN PATENT APPLICATION

(11) **EP 0 690 112 A1**
(43) Date of publication of application: **03.01.1996**
(21) Application number: 95304557.2
(22) Date of filing: 28.06.1995
(51) Int. Cl.: C09J 4/00, C09J 4/06

(54) **Cyanoacrylate adhesive compositions**

(30) Priority: 28.06.1994 JP 170172/94
(71) Applicant: TAOKA CHEMICAL COMPANY, LIMITED, Yodogawa-ku, Osaka 532 (JP)
(72) Inventor: Nagahama, Yoshio, Kobe-shi, Hyogo (JP); Hata, Chiaki, Ibaraki-shi, Osaka (JP); Kajigaki, Eizo, CA 922324 (US)
(74) Representative: Cresswell, Thomas Anthony

(57) **Abstract**

An α-cyanoacrylate adhesive composition which comprises an α-cyanoacrylate; a phthalic acid ester represented by the following formula [1]: 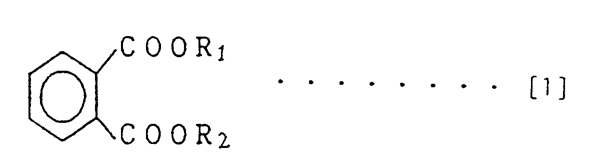
wherein R₁ and R₂ are each independently a C₁₋₂₀ alkyl, C₂₋₁₀ alkenyl, C₁₋₁₀ alkoxy-C₁₋₁₀ alkyl or C₃₋₁₀ cycloalkyl group or an aralkyl group in which the alkyl part contains 1 to 5 carbon atoms; and an elastomer, gives greatly improved flexibility and brittleness to the cured adhesive without lowering fast-curing property and bonding strength, and is particularly excellent in maintaining flexibility.

## Description

The present invention relates to an improvement in cyanoacrylate adhesive compositions suitably applied as instantaneous adhesives.

α-cyanoacrylates undergo anionic polymerization easily, i.e., they have a property of being polymerized and cured in a short period of time with moisture found on solid surfaces and in air or with anionic active species such as alkali substances without using catalysts or heating. Because of this property, α-cyanoacrylates are widely used as instantaneous adhesives for rubbers, plastics, metals, woods and the like.

When used solely, however, the α-cyanoacrylate adhesives have a drawback that the high cohesive force and high volume contraction factor during polymerization of the α-cyanoacrylates generally result in cured products which do not have sufficient flexibility and are hard and brittle. Particularly, the cured adhesives are insufficient in flexural strength and n bonding strength to a rough surface, and often cause undesired phenomena such as deformation and peeling. The α-cyanoacrylate adhesives, though applied in various industries, have remained to be used only for a temporary bonding.

A variety of methods have been proposed to solve this problem. For examples, a method of compounding a plasticizer such as a monocarboxylic acid ester and an aliphatic dicarboxylic acid ester (USP2784127) into an α-cyanoacrylate; a method of compounding a plasticizer such as dioctylphthalate (Japanese Patent Publication No. 37263/1978) into an α-cyanoacrylate; a method of compounding a plasticizer such as a phthalic acid ester, e.g. diallylphthalate and dibutylphthalate, together with a carboxylic acid or a polycarboxylic acid (USP3354128, Japanese Unexamined Patent Publication No.115386/1977) into an α-cyanoacrylate; a method of compounding a plasticizer together with a copolymer of vinyl chloride and vinyl acetate (Japanese Unexamined Patent Publication No.166361/1985) into an α-cyanoacrylate; and the like have been mentioned and have been conducted in order to improve flexibility, i.e. brittleness, of its cured product, one of drawbacks of conventional α-cyanoacrylate adhesives.

The conventional methods cited above, i.e. methods of compounding a plasticizer for improving flexibility, give a flexible cured adhesive layer immediately after curing. However, with lapse of time, the adhesive layer becomes hard and brittle due to plasticizer transfer, etc. Because of the undesired characteristic, the use of α-cyanoacrylate adhesives has been limited to so-called temporary bonding in which relatively easily separable bonding force is required.

An object of the present invention is to provide an improved α-cyanoacrylate adhesive composition which gives a cured product not only having improved flexibility but also preserving the flexibility and sufficient bonding force for a period of time.

The present invention provides an improved α-cyanoacrylate adhesive composition which comprises an α-cyanoacrylate; a phthalic acid ester represented by the following formula [1]: 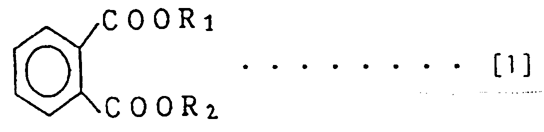
wherein R₁ and R₂ are each independently a C₁₋₂₀ alkyl, C₂₋₁₀ alkenyl, C₁₋₁₀ alkoxy-C₁₋₁₀ alkyl or C₃₋₁₀ cycloalkyl group or an aralkyl group in which the alkyl part contains 1 to 5 carbon atoms: and an elastomer, the amount of the phthalic acid ester being 5-55% by weight and the amount of the elastomer being 0.5-50% by weight based on the amount of the a-cyanoacrylate. When R₁ or R₂ is aralkyl, the aryl part of the aralkyl group is preferably phenyl.

The α-cyanoacrylate used in the present invention is represented by the following formula [2]: 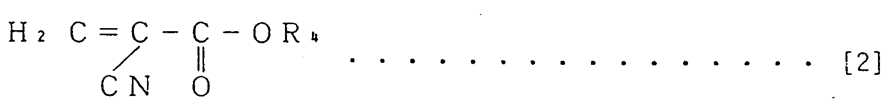
wherein R₄ is a C₁₋₂₀ alkyl group optionally substituted by halogen, etc., a C₂₋₁₀ alkenyl or C₂₋₁₀ alkynyl group, an aralkyl group in which the alkyl part contains 1 to 5 carbon atoms or aryl group optionally substituted by halogen, alkoxy or alkyl etc., or a C₁₋₁₀ alkoxy-C₁₋₁₀ alkyl, tetrahydrofurfuryl or C₃₋₁₀ cycloalkyl group. When R₄ is aryl or aralkyl, the aryl group or aryl part of the aralkyl group is preferably phenyl. Examples of R₄ include methyl, ethyl, n-propyl, i-propyl, n-butyl, i-butyl, sec-butyl, pentyl, hexyl, octyl, ethylhexyl, dodecyl, allyl, propargyl, methoxyethyl, ethoxyethyl, 2-methoxypropyl, tetrahydrofurfuryl, benzyl, phenyl, chloroethyl, cyclohexyl, and trifluoroethyl. The α-cyanoacrylate cited above may be used singly or as a mixture of two or more thereof.

Examples of the phthalic acid ester of the formula [1] include dimethyl phthalate, diethyl phthalate, methyl ethylphthalate, di-n-propyl phthalate, dibutyl phthalate, di-2-ethylhexyl phthalate, di-n-octyl phthalate, diisodecyl phthalate, diisononyl phthalate, butylbenzyl phthalate, dibenzyl phthalate, diallyl phthalate, dipentyl phthalate, dicyclohexyl phthalate and octyldecyl phthalate.

The amount of the phthalic acid ester of the formula [1] compounded into an α-cyanoacrylate is 5 to 55% by weight, preferably 10-50% by weight, more preferably 20-40% by weight, based on the amount of the α-cyanoacrylate. If the amount of the phthalic acid ester is 5 % by weight or less, sufficient flexibility of cured products, an object of the present invention, can not be attained. If the amount exceeds 55 % by weight, the bonding strength, another object of the present invention, can hardly be attained.

In the present invention, the elastomer compounded together with the phthalic acid ester to the α-cyanoacrylate contributes to impact strength and peeling resistance. The elastomer usable in the present invention must be able to dissolve or disperse the α-cyanoacrylate and exhibit rubber elasticity at around the room temperature. Examples of the elastomer include acrylate copolymer elastomer, styrene-butadiene elastomer, polyurethane elastomer, chloroprene elastomer, carboxylated acrylonitrile-butadiene elastomer, polyester elastomer, fluorine containing elastomer, polyisoprene elastomer, epichlorohydrin elastomer, ethylene-propylene elastomer and ethylene-vinyl acetate elastomer. These elastomers can be used singly or in combination of two or more thereof.

Among these elastomers, acrylate copolymer elastomer is preferably used in the present invention. The acrylate copolymer elastomer is a rubber elastic product which is commonly called as acrylic rubber. The acrylate copolymer elastomer is a copolymer made from two, three or more monomers such as methyl acrylate, ethyl acrylate, butyl acrylate, methoxyethyl acrylate, ethoxyethylacrylate, 2-chloroethyl acrylate, acrylic acid, acrylonitrile and ethylene. These elastomers are commercially available under the trade names such as Noxtite A, PA (manufactured by Nippon oil seal), Nipol AR (Nippon Zeon), Vamac (Dupont), Leo Coat R (Daiichi Lace), Para Cron BX (Shin-Nakamura Kagaku), Cyanacryl R, L, C (American Cyanamid), Hycar (B. F. Goodrich) and Toa Cron AR, SA (Toa Paint). They are normally used as not being vulcanized nor crosslinked. Preferable examples of the elastomers other than cited above include polyester elastomers commercially available under the trade names such as Elitel UE 3400 (Unichika), Vylon (Toyobo) or Kemit (Toray) and an urethane elastomer having the trade name, Desmocol (Sumitomo Beyer Urethane).

Amount of the elastomer in the present invention is 0.5 - 50 % by weight, preferably 1 - 30 % by weight based on amount of the α-cyanoacrylate.

The α-cyanoacrylate adhesive compbsition of the present invention can be prepared easily by adding a compound selected from the phthalic acid ester of the formula [1] and the above-cited elastomer to the α-cyanoacrylate and mixing them. The phthalic acid ester and the elastomer may be added to the α-cyanoacrylate as they are or they may be added after one of, or both of, them were dissolved in an appropriate solvent.

In order to give favorable properties for some uses, the α-cyanoacrylate adhesive composition of the present invention may further contain one or more kinds of compounds selected from
calixarene compounds;
compounds having repeating units represented by the following formula [3]: 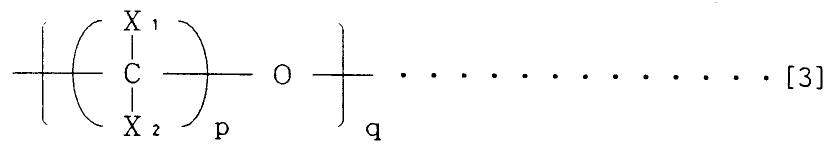
wherein X₁ and X₂ are each independently a hydrogen atom, a halogen atom, a hydroxyl group, or a C₁₋₄ alkyl, C₂₋₆ alkenyl in in which the alkyl part contains 1 to 5 carbon atoms, these groups being optionally substituted by halogen, etc; p is an integer not smaller than 1; and q is an integer not smaller than 2; and the ends may be cyclized; and
polyhydroxy compounds represented by the following formula [4]: 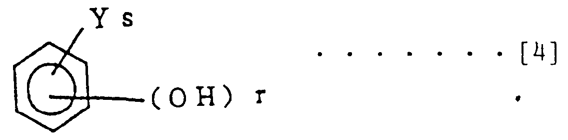
wherein r is an integer of 2-6, Y is a hydrogen atom, a halogen atom, or a C₁₋₂₀ alkyl group optionally substituted by halogen, etc, or a C₁₋₁₀ alkoxy, carboxyl or C₂₋₁₀ alkoxycarbonyl group; and s is an integer of 0-4, provided that at least two hydroxy groups are adjacent each other. When X₁ or X₂ is aralkyl, the aryl part of the aralkyl group is preferably phenyl.

The compounds having repeating units of the formula [3] mainly contribute as fast-curing additives. As examples of the compound, the following can be cited;
formaldehyde condensate;
acetaldehyde condensate;
trioxane polymer;
polyalkylene glycol such as diethylene glycol, triethylene glycol, tetraethylene glycol, polyethylene glycol (400, 1000, etc.), dipropylene glycol, polypropylene glycol, polytetramethylene oxide, poly 3,3-bis(chloromethyl) butylene oxide, poly 1,3-dioxolane and ethyleneoxide-propyleneoxide block polymer;
polyalkylene glycol monoether such as methyl carbitol, carbitol, diethyleneglycol-n-butyl ether, diethyleneglycol phenyl ether, diethyleneglycol benzyl ether, dipropyleneglycol ethyl ether, tripropyleneglycol methyl ether, polyethyleneglycol methyl ether, polyethyleneglycol propyl ether, polyethyleneglycol laurylether, polyethyleneglycol stearyl ether, polyoxyethylene nonyl phenyl ether, and polyethylene glycol allyl ether;
polyalkylene glycol diether such as diethyleneglycol diethyl ether, diethyleneglycol di-n-butylether, triethyleneglycol dimethyl ether, tetraethyleneglycol distearyl ether, and polyethylene glycol dimethyl ether;
polyalkyleneglycol monoester such as diethylene glycol monopropionate, tetraethylene glycol monoacetate, tripropylene glycol mono-n-butylate, polyethylene glycol monoacetate, polyethylene glycol monopropionate, polyethylene glycol laurate, polyethylene glycol cetylate, polyethylene glycol stearate, polyethylene glycol oleate, polyoxyethylene sorbitan monolaurate, diethylene glycol acrylate, diethylene glycol methacrylate, and diethylene glycol crotonate;
polyalkylene glycol diester such as diethyleneglycol diacetate, diethyleneglycol dipropionate, diethyleneglycol diacrylate, diethyleneglycol distearate, diethyleneglycol methacrylate, tetraethyleneglycol dicrotonate, polyethyleneglycol diacetate, polyethyleneglyco 1 di-n-butylate, polyethyleneglycol dilaurate, polyethyleneglycol diacrylate, polyethyleneglycol dimethacrylate, polyethyleneglycol dicrotonate, polyethyleneglycol di-α-cyanoacrylate, polyethyleneglycol stearyl methacrylate, and polyethyleneglycol lauryl acrylate;
polyalkyleneglycol monoether monoester such as acrylate, methacrylate, crotonate and α-cyanoacrylate of glycol monoether compounds such as diethyleneglycol monoethyl ether, diethyleneglycol monomethyl ether, polyethyleneglycol monomethyl ether, polyethyleneglycol monoethyl ether, tetraoxyethyleneglycol monomethyl ether, polyoxyethyleneglycol monolauryl ether and polyoxyethylenegl ycol monononyl phenyl ether; and
other additives such as bisphenol A-polyalkylene oxide additive, trimethylolpropane-polyalkylene oxide additive, glycerin-polyalkylene oxide additive, adipic acid-polyalkylene oxide additive and trimellitic acid-polyalkylene oxide additive. Other examples of the compounds having repeating units of the formula [3] include cyclic compounds such as 18-crown-6, 15-crown-5, 18-crown-5, dithio-15-crown, dibenzo-18-crown-6, dicyclohexyl-18-crown-6, 1,2-naphtho-15-crown-5, and 1,2-methylbenzo-18-crown-6. These compounds may be used singly or in combination of two or more thereof.

The calixarene compound is generally expressed by the following formula [5]: 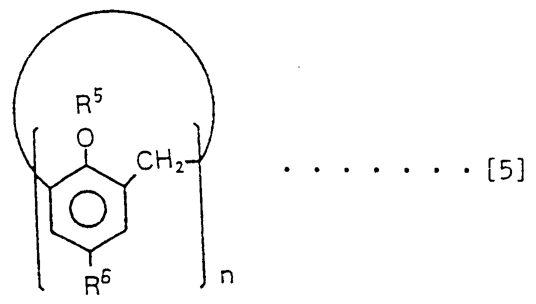
wherein R⁵ is either a hydrogen atom, a C₁₋₅ alkyl group optionally substituted by halogen, etc., or -CH₂COR³ wherein R³ is C₁₋₅ alkyl or C₁₋₅ alkoxy; R⁶ is either a hydrogen atom, or a C₁₋₅ alkyl group optionally substituted by halogen, etc.; and n is 4, 6 or 8. Preferred examples of such calixarene compounds include 5,11,17,23,29,35-hexa-tert-butyl-37,38,39,40,41, 42-hexahydroxy calix-[6]arene, 37,38,39,40,41,42-hexahydroxy calix-[6]arene, 37,38,39,40,41,42-hexa-(2-oxo-2-ethoxy)-ethoxy calix-[6]arene, which is cited in JP-A-60-179482, and 25,26,27,28-tetra-(2-oxo-2-ethoxy)-ethoxy calix-[4]arene.

The amount of the compounds having repeating units of the formula [3] or the amount of the calixarene compound is preferably 0.005-5 % by weight, more preferably 0.01-1 % by weight, based on the amount of the α-cyanoacrylate.

The polyhydroxy compounds of the formula [4] mainly contribute for imparting bonding-strength and water-resistance. Examples of the polyhydroxy compounds include pyrogallol, catechol, di-t-butylcatechol, 1,2,4-trihydroxy benzene, tetrahydroxy benzene, hexahydroxy benzene, gallic acid, ethyl gallate and dichlorogallic acid. These polyhydroxy compounds may be used singly or in combination of two or more thereof. Among the polyhydroxy compounds, pyrogallol is most preferred for the object of the present invention.

The amount of the polyhydroxy compounds of the formula [4] is preferably 0.001-1 % by weight, more preferably 0.01-0.1 % by weight, based on the amount of the α-cyanoacrylate.

The compounds having repeating units of the formula [3], the polyhydroxy compounds of the formula [4] and the calixarene compounds can be used independently of each other; or they may be used in a combination of the compounds having repeating units of the formula [3] and the polyhydroxy compounds of the formula [4] or in a combination of the calixarene compounds and the polyhydroxy compounds of the formula [4].

To the improved α-cyanoacrylate adhesive composition of the present invention, one or more kinds of stabilizers may be added in addition. Examples of the stabilizers include anionic polymerization inhibitors such as sulfur dioxide , sulfonic acids e.g. methanesulfonic acid or ethanesulfonic acid, HBF₄, complex salts of BF₃-ether, sultone, i.e. 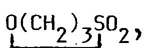
and complex salts of BF₃-acetic acid; and radical polymerization inhibitors such as hydroquinone and hydroquinone monomethyl ether.

Among the stabilizers cited above, HBF₄ and complex salts of BF₃-ether are particularly preferred for the object of the present invention. The stabilizers cited above can be used alone or in combination with other stabilizers.

The amount of the stabilizer is preferably 0.0001-0.1% by weight, more preferably 0.0005-0.01% by weight, based on the amount of the α-cyanoacrylate.

An α-cyanoacrylate adhesive composition comprising 5-55 % by weight of one or more kinds of phthalic acid ester of the formula [1], 0.5-30 % by weight of elastomer, 0.0001-0.1 % by weight of HBF₄ or complex salts of BF₃-ether as a stabilizer, 0.005-5 % by weight of the compound of the formula [3] as a fast curing additive, 0.01-1 % by weight of the polyhydroxy compound of the formula [4] and α-cyanoacrylate is one of the most preferable embodiment of the present invention.

If required, other additives which have been conventionally used in α-cyanoacrylate type adhesive compositions can be added to the α-cyanoacrylate type adhesive composition of the present invention. Examples of the additives include coloring agents, perfumes, solvents, plasticizers other than those cited-above, thickeners and thixotropy agent. As examples of the thickeners, polymethylmethacrylate, methylmethacrylic acid/acrylate copolymer, methacrylic acid/methacrylate copolymer, and cellulose acetate, which are thickeners commonly used for α-cyanoacrylate type adhesive compositions, can be mentioned.

As the thixotropy agent, a finely divided anhydrous silica is preferably used. The finely divided anhydrous silica includes a hydrophilic silica and a hydrophobic silica. As examples of the hydrophilic silica, Aerosil 130, Aerosil 200, Aerosil 300 and Aerosil 380, manufactured by Nippon Aerosil Co. and having a specific surface of 130 ± 25m/g, 200 ± 25m/g, 300 ± 30m/g, 380 ± 30m/g, respectively, can be cited. As other examples of the hydrophilic silica, Reolosil QS-10, QS-20, QS-30 and QS-40, manufactured by Tokuyama Co. and having a specific surface of 140 ± 20m/g, 220 ± 20m/g, 300 ± 30m/g, 380 ± 30 m/g, respectively, can be cited. A finely divided anhydrous silica manufactured by DEGUSSA Co.(Germany) and the one manufactured by CABOT Co.(USA) can also be used as a hydrophilic silica.

As examples of the hydrophobic silica, Aerosil R972, Aerosil RX200 and Aerosil RY200, manufactured by Nippon Aerosil Co can be cited. Each of them is produced by treating the surface of a hydrophilic silica with methyl group, trimethylsilyl group or dimethyl silicone oil, respectively, and each of them has a specific surface of 110 ± 25 m/g, 140 ± 25m/g or 100 ± 20m/g, respectively. Aerosil R202, Aerosil R805, Aerosil R812 and the like, manufactured by Nippon Aerosil Co can also be used as a hydrophobic silica. Each of them is produced by treating the surface of a hydrophilic silica with dimethylsilicone oil, n-octyl trimethoxy silane or trimethylsilyl group, respectively, and has a specific surface of 100 ± 20m/g, 150 ± 25 m/g or 260 ± 30m/g, respectively. As other examples of the hydrophobic silica, Reolosil MT-10, DM-20 and HM-20S, manufactured by Tokuyama Co, can be cited. Each of MT-10, DM-20 and HM-20S is produced by treating the surface of a hydrophilic silica with monomethyl trichlorosilane, dimethyl dichlorosilane or hexamethyl disilazane, and has a specific surface of 120 ± 10m/g, 180 ± 20m/g or 145 ± 20m/g, respectively. A finely divided anhydrous silica manufactured by DEGUSSA Co.(Germany) and the one manufactured by CABOT Co.(USA) can also be used as a hydrophobic silica.

Although the amount of the finely divided anhydrous silica to be added to the adhesive composition of the present invention varies depending on its use, it is usually 2-20 parts by weight, preferably 4-15 parts by weight, per 100 parts by weight of the α-cyanoacrylate. The finely divided anhydrous silica gives high thixotropy to the adhesive composition, maintains favorable properties of gel type cyanoacrylate adhesive compositions (or jelly type cyanoacrylate adhesive compositions) for long period, and prevents sagging of an adhesive layer on a vertical surface. Therefore, the adhesive compositions containing the finely divided anhydrous silica are preferably applied to a vertical surface.

The α-cyanoacrylate adhesive composition of the present invention gives greatly improved flexibility and brittleness to the cured adhesive, which have been drawbacks of conventional α-cyanoacrylate adhesive compositions, without lowering fast-curing property and bonding strength, which have been favorable properties of the conventional compositions. The α-cyanoacrylate adhesive composition is particularly excellent in maintaining flexibility, while having excellent impact, peeling, water and heat resistances and the like. Therefore, the present invention has a great value since it provides an adhesive composition exhibiting excellent flexibility without harming favorable characteristics of conventional instantaneous adhesives with industrial and economical advantages, and allows the adhesive composition to expand its applications.

### EXAMPLE EMBODIMENT

The present invention will now be described in more detail in conjunction with example embodiments.

### Examples 1-14 and Comparative example 1

### [Preparation of Specimen]

Specified amounts of the additives described in Table 1 - Table 5 were added into a vessel, and they were stirred and dissolved for several hours at a temperature of 40 ± 2°C to prepare a uniform adhesive composition containing an elastomer. Using each of the adhesive compositions thus prepared, the following adhesive performance tests were conducted and their results were shown in Table 1 - Table 5.

For comparison, an adhesive composition not containing an elastomer was prepared and the same tests were conducted. The results were shown in Table 3.

In the Tables, "part" means "part by weight" and "ppm" means "parts per million by weight, based on the amount of α-cyanoacrylate" unless otherwise mentioned.

### [Test Method]

### (1) Method of Measuring Shore hardness D1

An adhesive layer having a thickness of 1 mm was prepared on a rubber plate having dimensions of 25 × 50 mm.

After the layer was cured thoroughly, hardness of the cured layer was measured at 25°C by using a D-type Shore hardness tester produced by Ueshima Seisakusho.

### (2) Method of Measuring Shore hardness D2

An adhesive layer having a thickness of 1 mm was prepared on a rubber plate having dimensions of 25 × 50 mm.

After the layer was cured thoroughly, and then the curing was promoted further at 60°C for one day, followed by cooling the layer to 25 °C, hardness of the cured layer was measured by using a D-type Shore hardness tester produced by Ueshima Seisakusho.

### (3) Method of Bending test (angle)

An adhesive layer having a thickness of 1 mm was prepared on a rubber plate having dimensions of 25 × 50 mm and the layer was cured thoroughly. Bending the cured layer with the rubber plate, the bending angle where the cured layer was cracked was measured. Unit is " ° ".

### (4) Method of Measuring Curing speed (Set Time)

Measurements were carried out in accordance with JIS K-6861-8 "Set Time Measuring Method." Unit is second.

### (5) Method of Measuring T-Type Peeling Strength

Measurements were carried out in accordance with JIS K-6854 "Method of Testing Peeling Strength of Adhesive.", provided that the steel test pieces were not ground but only fat removing were conducted.
Unit is kgf/25mm.

### (6) Method of Measuring Impact Bonding Strength

Measurements were taken in accordance with JIS K-6855 "Method of Testing Impact Bonding Strength of Adhesive." Unit is kgf· cm/cm.

### (7) Method of Measuring Tensile Shear Bonding Strength

Measurements were taken in accordance with JIS K-6861-6 "Method of Measuring Tensile Shear Bonding Strength." Unit is Kgf/cm.

### (8) Method of Measuring Water Resistance

Tensile Shear Bonding Strength was measured by the method (7) in accordance with JIS K-6861 after the specimens were bonded and hardened and then dipped in water at 40 °C for five days.

### (9) Method of Measuring Heat Resistance

Tensile Shear Bonding Strength was measured by the method (7) in accordance with JIS K-6861 after the specimens were bonded and hardened, heated at 100 °C for 24 hours and cooled to room temperature.

### (10) Method of Measuring Viscosity

Measurements of viscosity were carried out in accordance with JIS K-6833-6.3 "Viscosity Measuring Method." Unit is a centimeter poise (CPS).

The incipient viscosity in the Tables indicates the value measured immediately after the adhesive compositions were prepared. The after-storage viscosity in the Tables indicates the value measured after the adhesive compositions had been stored at 70 °C for seven days.

NOTE 1: The symbols and trade names used in the Tables mean as listed below:
- DMP: : Dimethylphthalate
- DEP: : Diethylphthalate
- DBP: : Dibutylphthalate
- DOP: : Di-2-ethylhexylphthalate
- DIDP: : Diisodecylphthalate
- BBP: : Butylbenzylphthalate
- DAP: : Diallylphthalate
- Leo Coat R1020: : Acrylic elastomer manufactured by Dai-Ichi Lace K.K.
- Vamac G: : Acrylic rubber manufactured by Du Pont K.K.
- Desmocol: : Polyurethane elastomer manufactured by Sumitomo Beyer Urethane K.K.
- PGL: : Pyrogallol
- PEG1000: : Polyethylene glycol (1000)
- M90G: : Monoacrylate of Polyethylene glycol (400) monomethyl ether
- Aerosil #130: : A finely divided anhydrous silica manufactured by Nippon Aerosil Co.

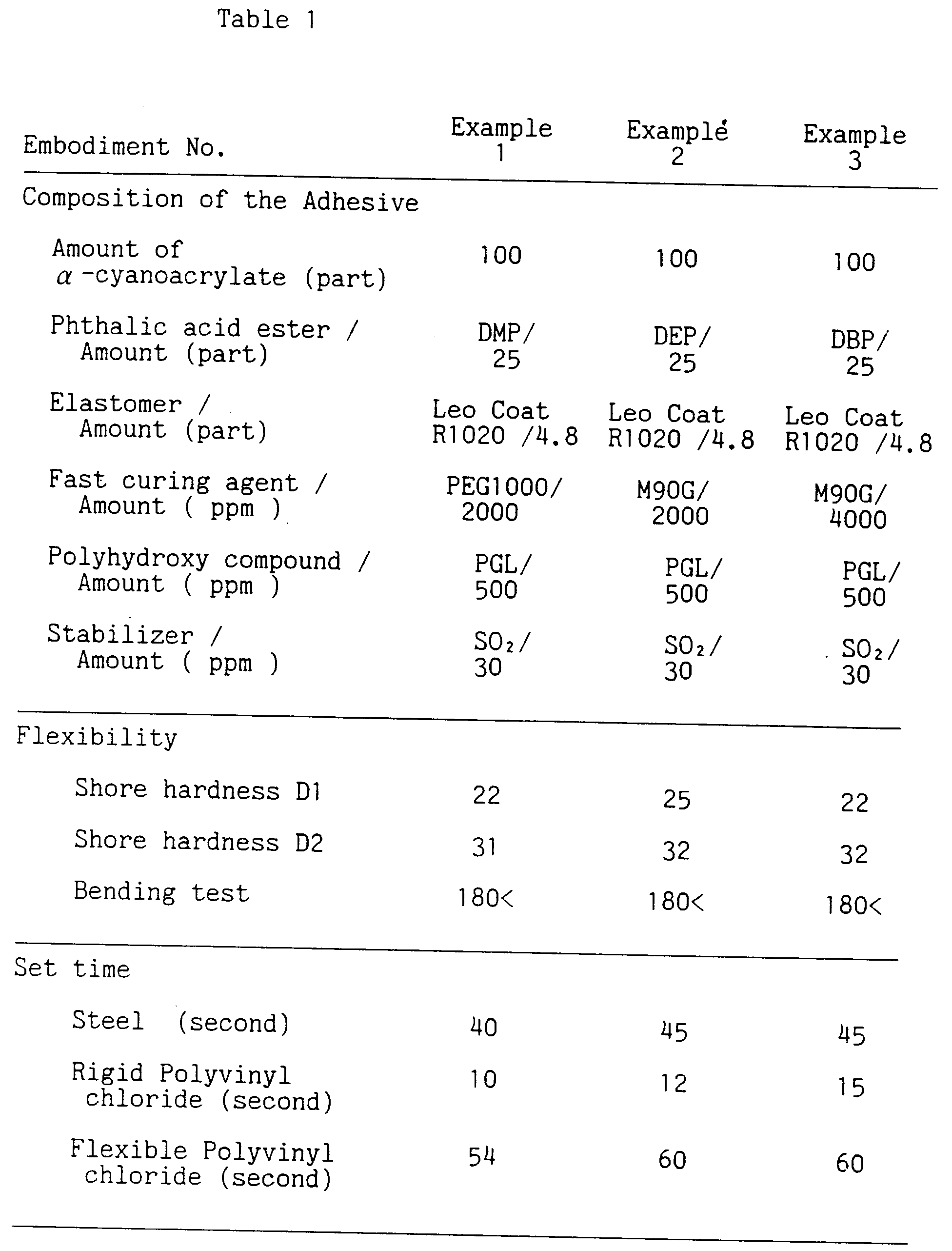

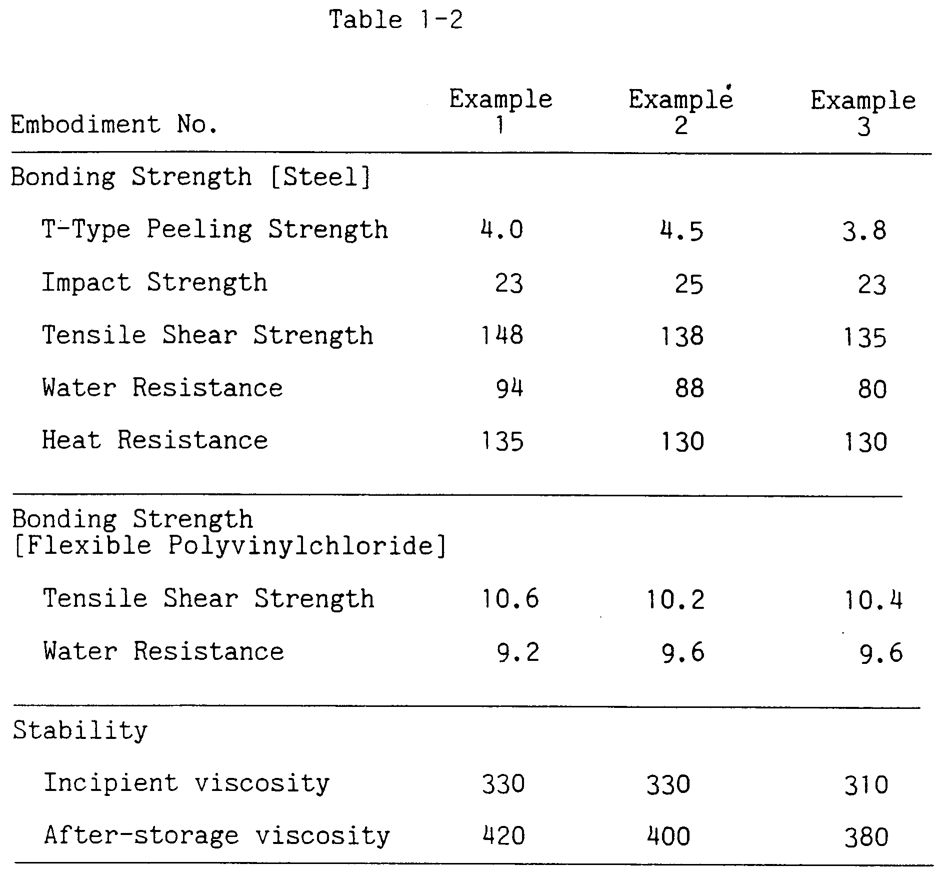

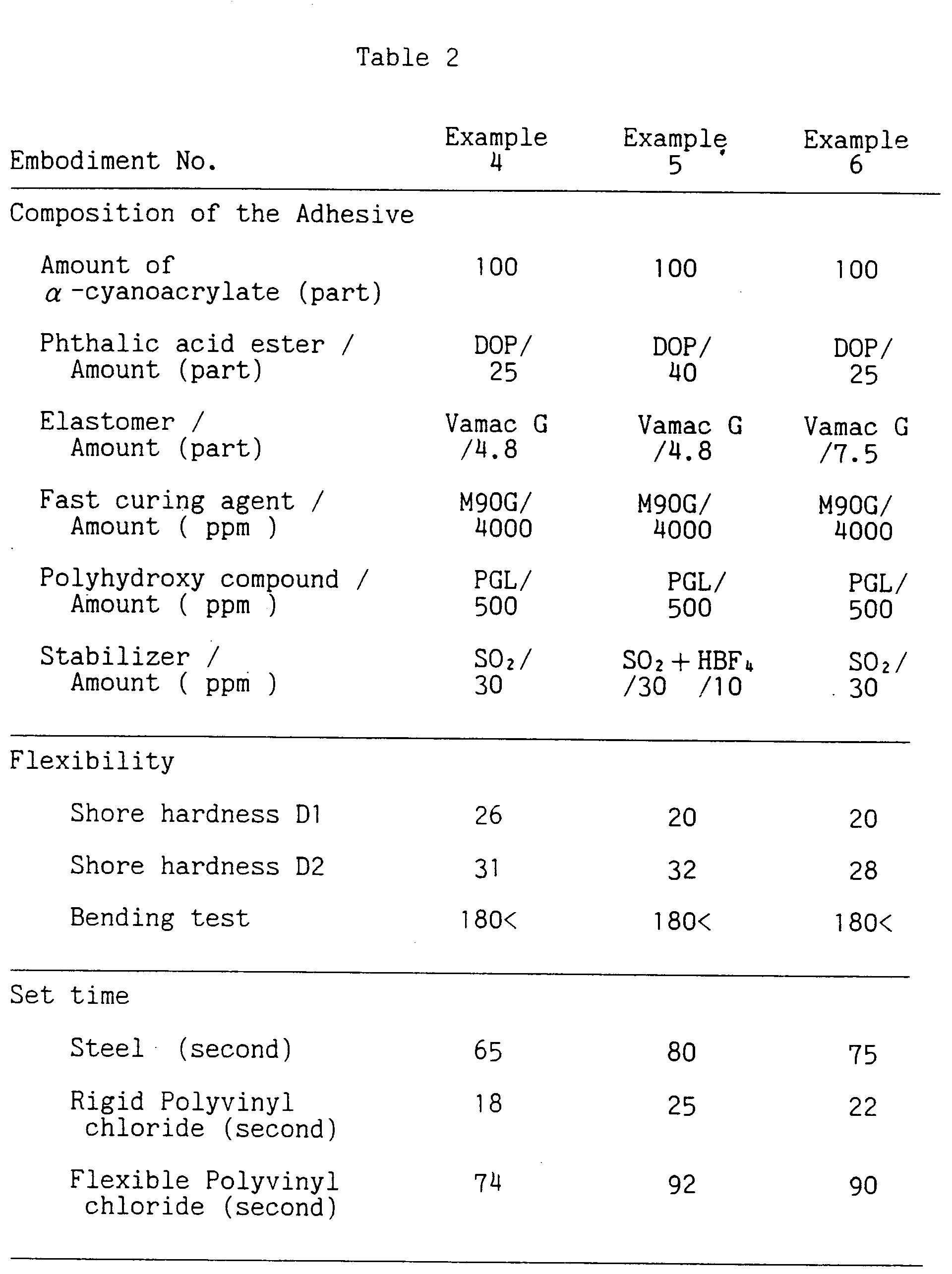

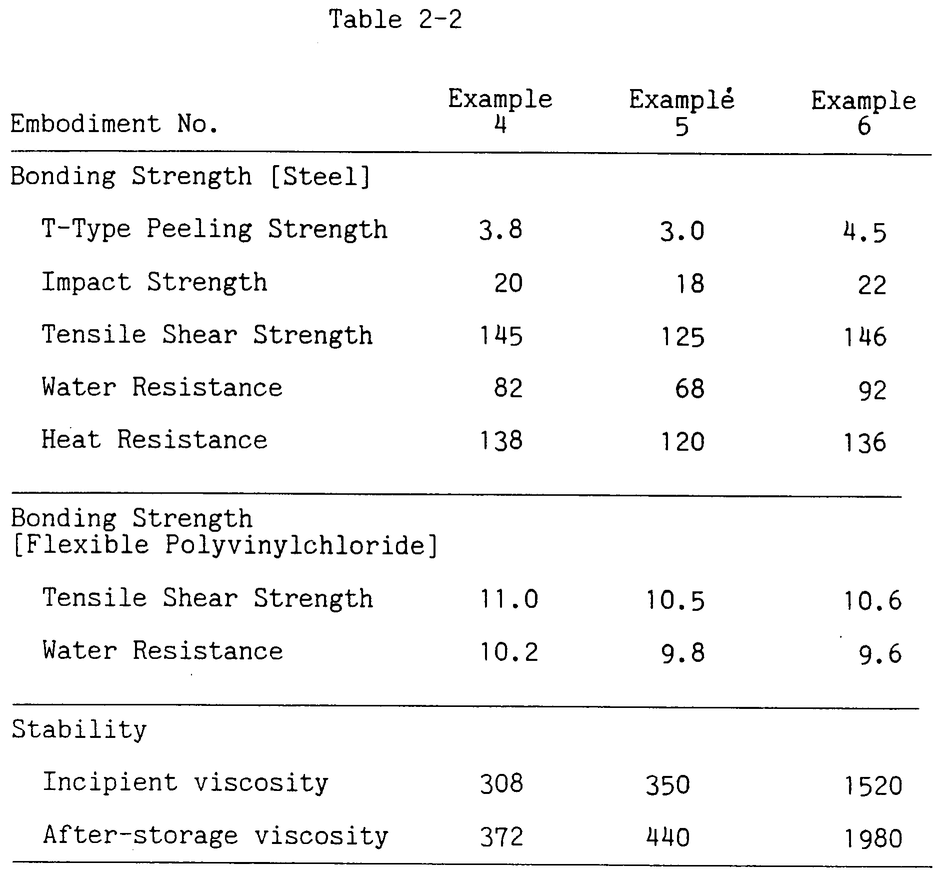

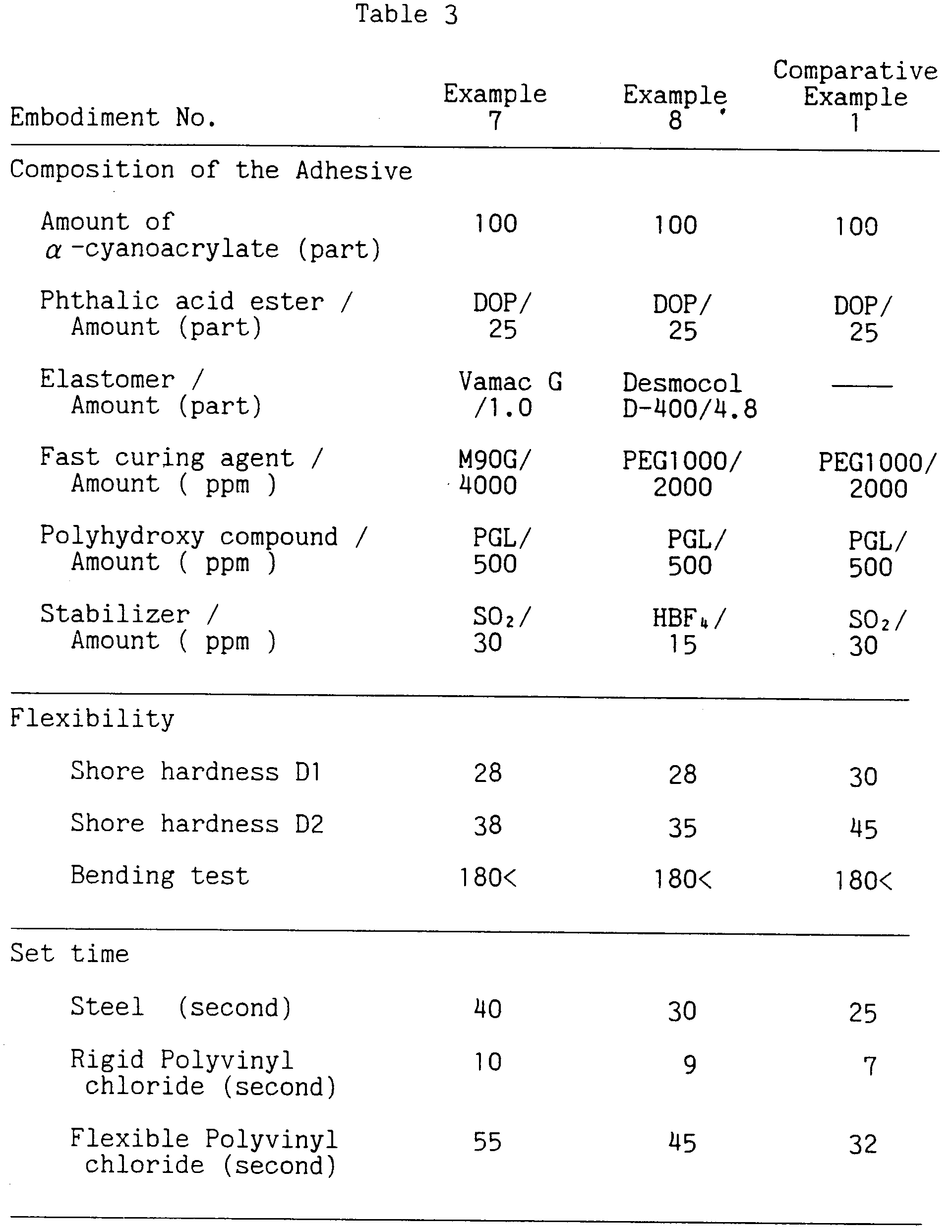

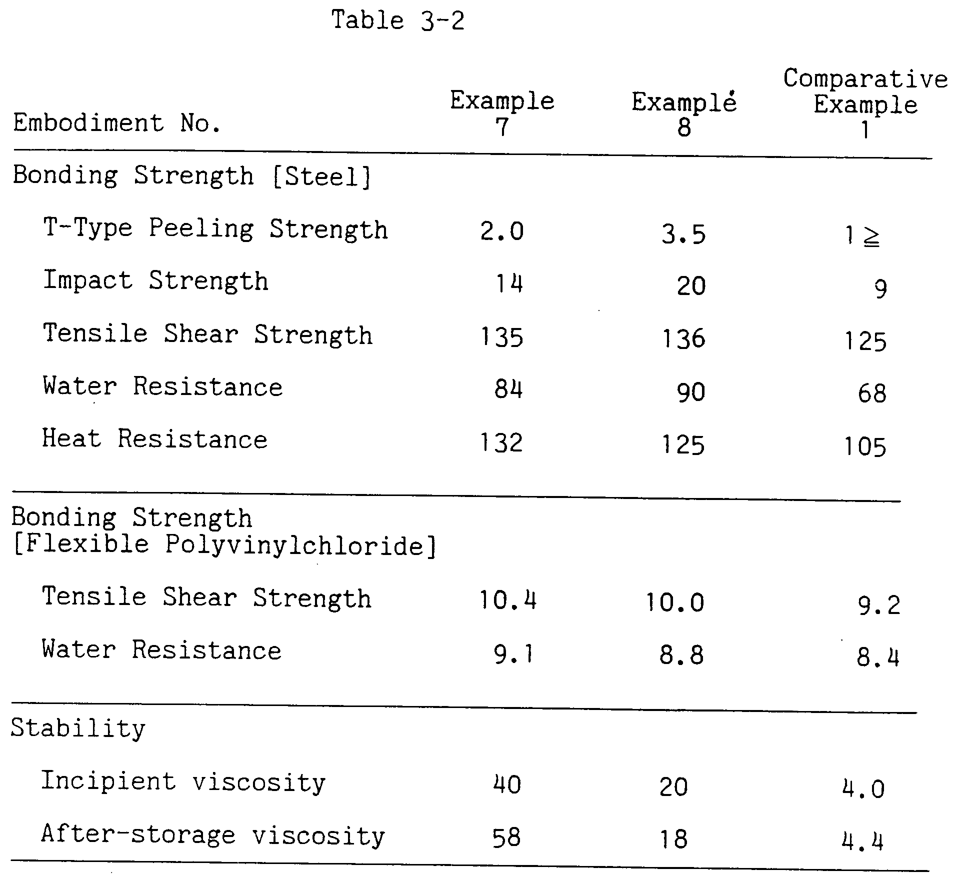

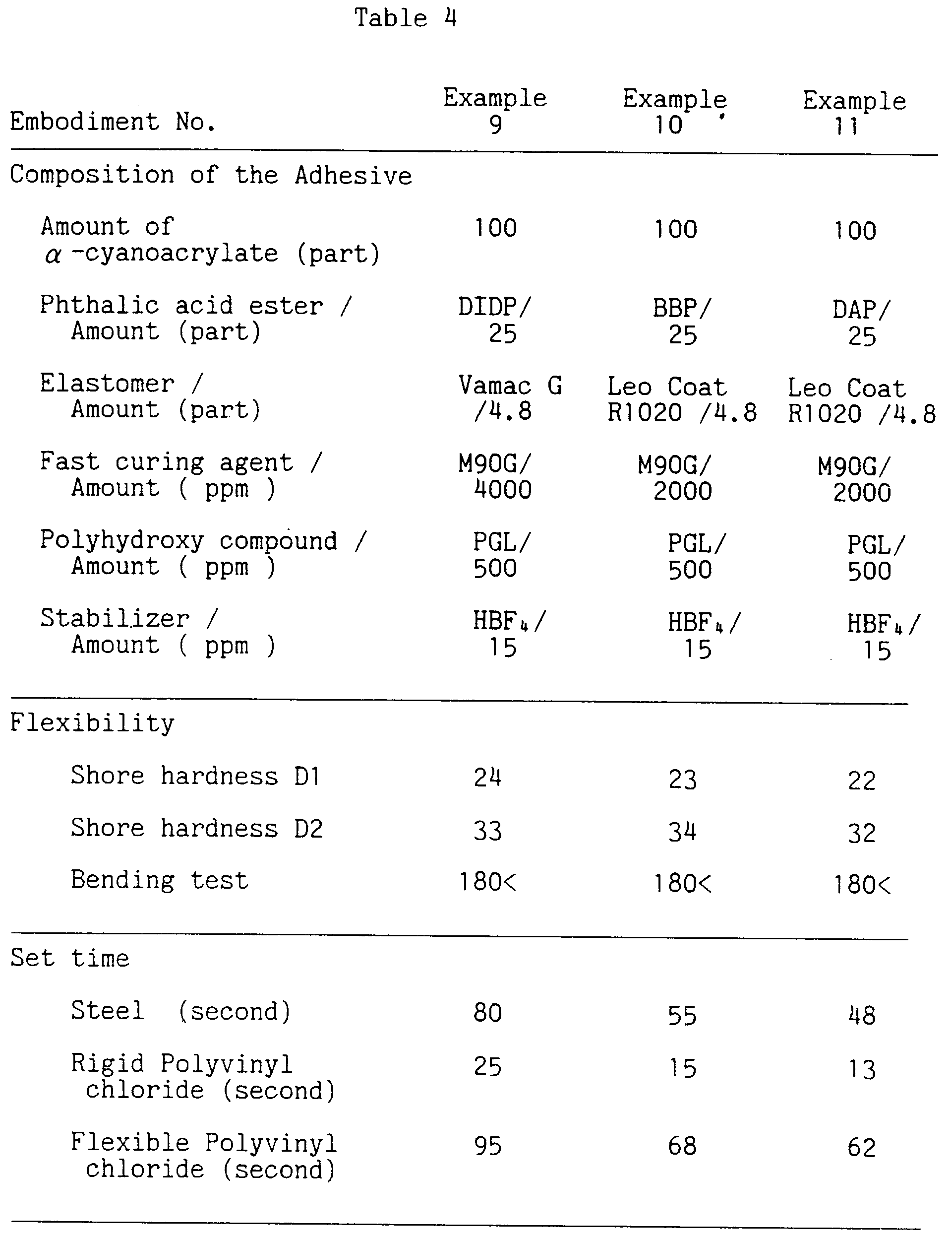

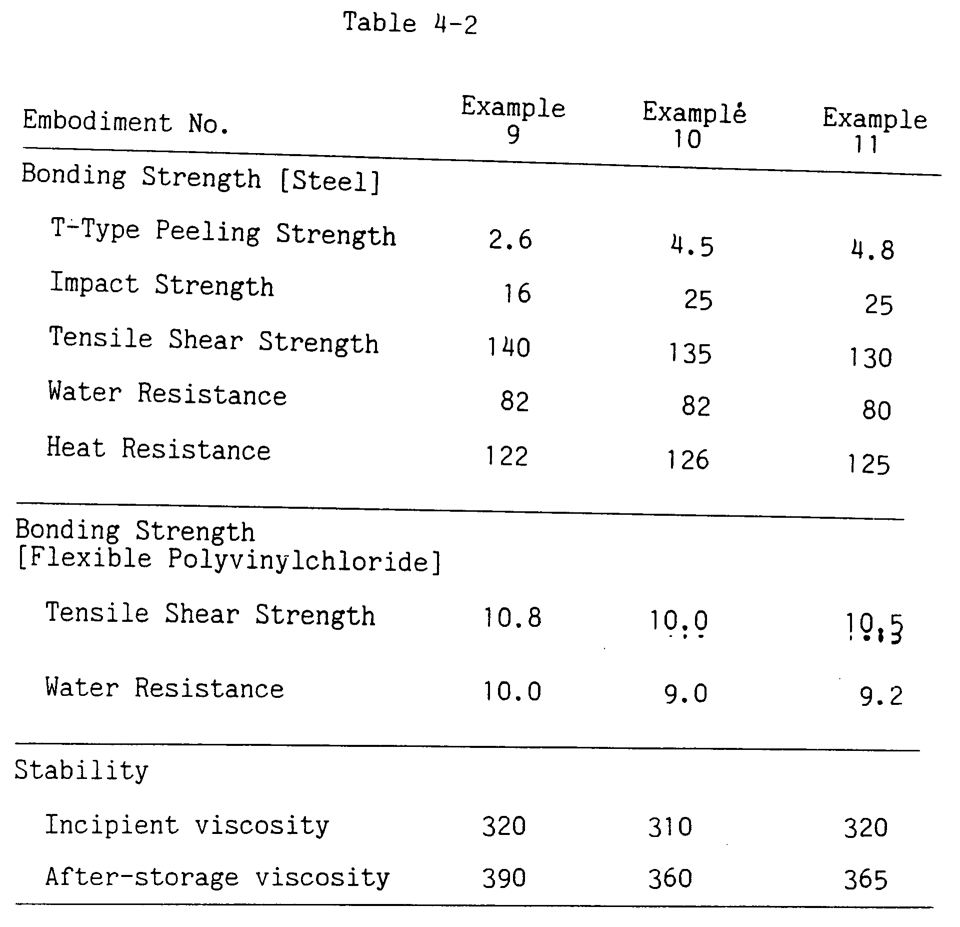

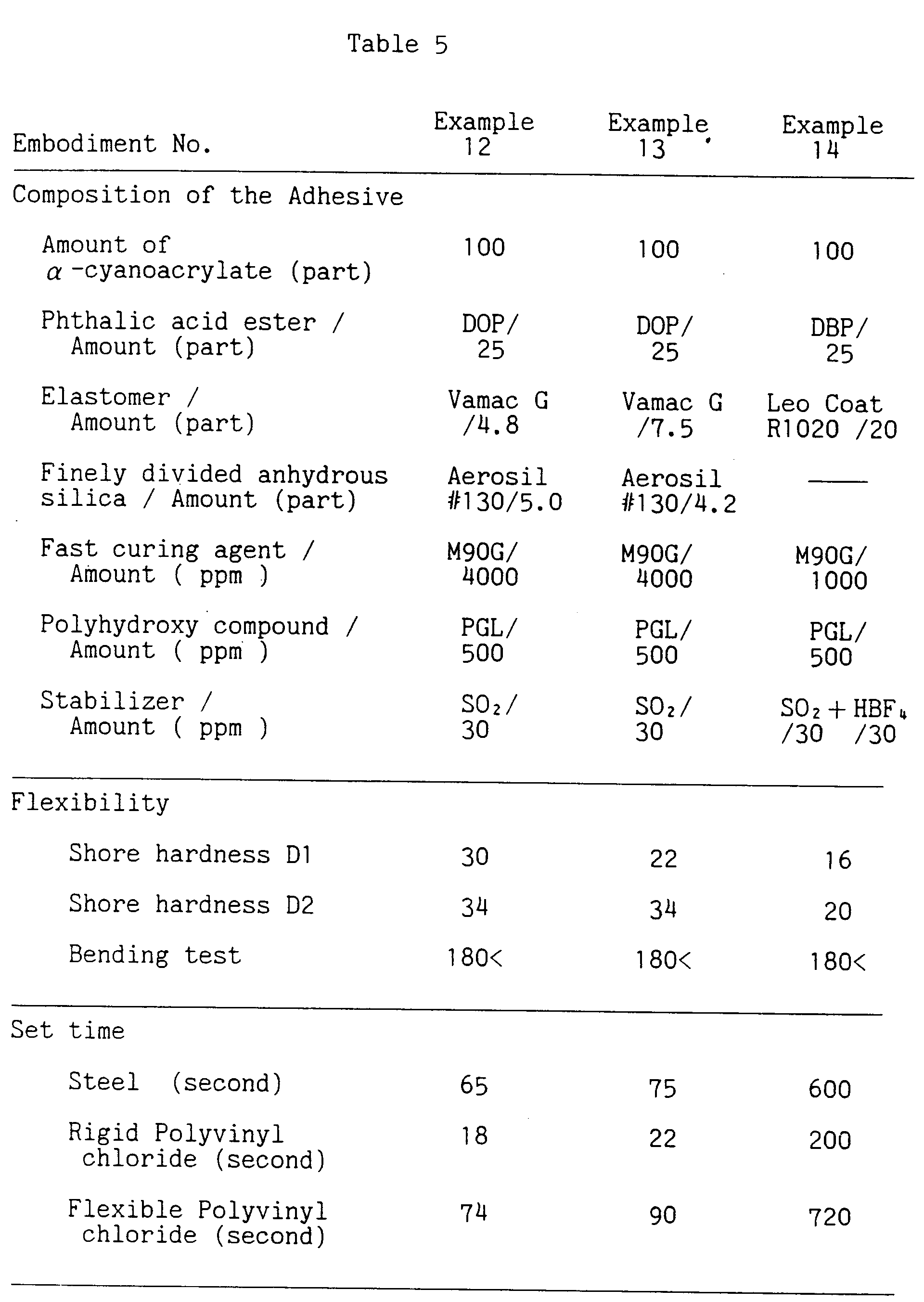

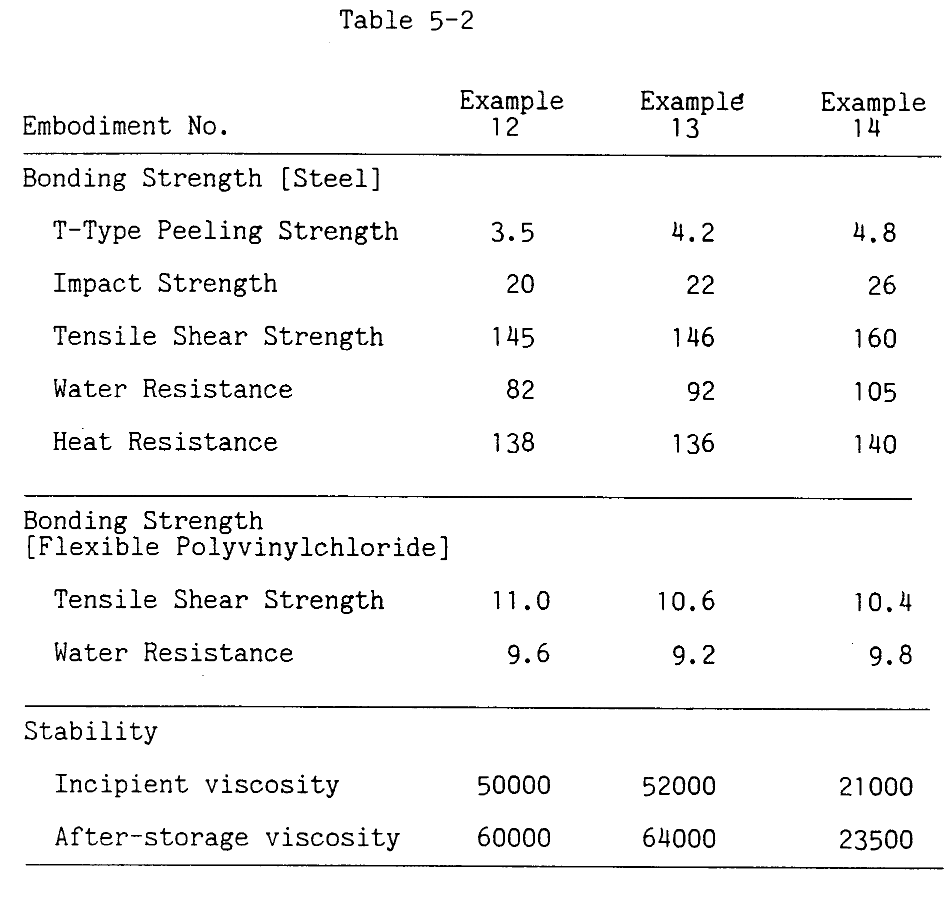

## Claims

1. An α-cyanoacrylate adhesive composition which comprises 100 parts by weight of an α-cyanoacrylate; 5-55 parts by weight of a phthalic acid ester of formula [1]: 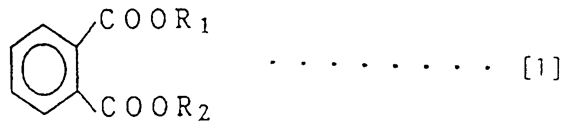 wherein R₁ and R₂ are each independently a C₁₋₂₀ alkyl, C₂₋₁₀ alkenyl, C₁₋₁₀ alkoxy-C₁₋₁₀ alkyl or C₃₋₁₀ cycloalkyl group or an aralkyl group in which the alkyl part contains 1 to 5 carbon atoms; and 0.5-50 parts by weight of an elastomer.

2. A composition according to claim 1, wherein the amount of phthalic acid ester of formula [1] is 10-50 parts by weight and the amount of elastomer is 1-30 parts by weight per 100 parts by weight of α-cyanoacrylate.

3. A composition according to claim 1 or 2, wherein the elastomer is an acrylate copolymer elastomer.

4. A composition according to claim 3, wherein the acrylate copolymer elastomer has ethyl acrylate as one of its monomer units.

5. A composition according to any one of the preceding claims, which further comprises 0.0001-0.1% by weight of a stabilizer based on the amount of α-cyanoacrylate.

6. A composition according to claim 5, wherein the stabilizer comprises sulfur dioxide, a BF₃-ether complex salt, or HBF₄.

7. A composition according to any one of the preceding claims, which further comprises:
a calixarene compound;
a compound having repeating units of formula [3]: 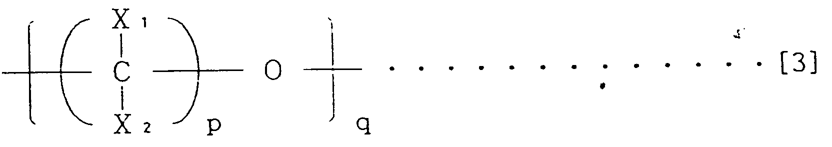 wherein X₁ and X₂ are each independently a hydrogen atom, a halogen atom, a hydroxyl group, or a C₁₋₄ alkyl, C₂₋₆ alkenyl or aralkyl group in which the alkyl part contains 1 to 5 carbon atoms, these groups being optionally substituted by halogen, etc; p is an integer not smaller than 1: and q is an integer not smaller than 2; and the ends may be cyclized; or
a polyhydroxy compound of formula [4]: 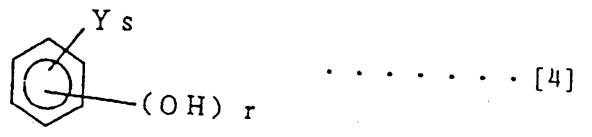 wherein r is an integer of 2-6, Y is a hydrogen atom, a halogen atom, or a C₁₋₂₀ alkyl group optionally substituted by halogen, etc., or a C₁₋₁₀ alkoxy, carboxyl or C₂₋₁₀ alkoxycarbonyl group; and s is an integer of 0-4, provided that at least two hydroxy groups are adjacent each other.

8. A composition according to claim 1 which further comprises a compound having repeating units of formula [3] and a polyhydroxy compound of formula [4] as defined in claim 7.

9. A composition according to claim 1, which further comprises a calixarene compound and a polyhydroxy compound of formula [4] as defined in claim 7.

10. A composition according to claim 7 or 8, wherein the amount of compound having repeating units of formula [3] is 0.005-5% by weight based on the amount of α-cyanoacrylate.

11. A composition according to claim 7 or 9, wherein the amount of calixarene compound is 0.005-5% by weight based on the amount of α-cyanoacrylate.

12. A composition according to claim 7, 8 or 9, wherein the amount of polyhydroxy compound of formula [4] is 0.001-1% by weight based on the amount of α-cyanoacrylate.
